# EUROPEAN PATENT SPECIFICATION

(11) **EP 2 996 460 B1**
(45) Date of publication and mention of the grant of the patent: **08.11.2017**
(21) Application number: 14728598.5
(22) Date of filing: 14.05.2014
(51) Int. Cl.: A01G 1/00, A01G 1/12

(54) **TURF TREATMENT METHOD**
BODENBEHANDLUNGSVERFAHREN
PROCÉDÉ DE TRAITEMENT DE GAZON

(30) Priority: 14.05.2013 GB 201308590
(43) Date of publication of application: 23.03.2016
(73) Proprietor: Richard Campey Limited, Cheshire (GB)
(72) Inventor: CAMPEY, Rihard, John, Langley Macclesfield (GB); GUMBRILL, Simon, Jonathan, Stockport Cheshire SK7 6HF (GB)
(74) Representative: TLIP Limited
(86) International application number: PCT/GB2014/000187
(87) International publication number: WO 2014/184512

(56) References cited:
- WO-A1-2013/027005
- GB-A- 2 487 262
- Dennis Smith: "NEWS RELEASE FROM THE OFFICE OF: Scalping Your Lawn-Should You Do It?", , 1 September 2011 (2011-09-01), XP055134924, Retrieved from the Internet: URL:http://gregg.agrilife.org/files/2011/0 9/22705scalpingyourlawnsharpenmowerblades_ 5.pdf [retrieved on 2014-08-15]

## Description

This invention relates to turf treatment, and particularly to the management of turf on sports fields.

Warm season, stoloniferous grasses such as Bermudagrass and Buffalograss grow primarily, as their name implies, during the spring and summer seasons, particularly in warm regions, and are much used for sports surfaces including golf, tennis and football for their properties of fast growth, cushioning against impact from falls, tackles and slides, affording good foothold, and their ability to recover from wear and tear.

They are dormant out of season and sometimes discolour. They are sometimes then overseeded with rye grass, for example, to maintain a good appearance in the cold seasons. Otherwise, they are treated much as for other grasses, by mowing to a height appropriate to the sport being played, by fertilising, thatch removal and so forth.

They can be used in conjunction with artificial fibre reinforcement systems, such as Desso® Grassmaster.

The present invention provides an improved treatment for warm season grass turf that is effective when the grass used on its own, or with winter overseeding, or with artificial fibre reinforcement. A commonly known treatment is scalping, c.f. "Scalping Your Lawn-Should You Do It?", by Dennis Smith. The invention comprises a method for managing warm season, stoloniferous grass turf on sports fields, comprising removing the upper layer of turf down to but not including the stolons, and allowing the grass to regenerate, characterised in that the layer of turf is removed using a height-adjustable rotor which is rotated about a horizontal axis and comprises teeth, the rotor being adjusted for height so that the teeth just skim the soil surface, the rotor being traversed over the turf and rotated at such speed relative to the rate of traverse over the turf that no or substantially no part of the turf is left untreated.

Stolons are essentially runners that connect the crowns of some varieties of grass plants, particularly warm season grass, at soil surface level. Grass will regenerate from stolons left after substantially all else has been removed.

An appropriate time to carry out the treatment would, of course, be at the end of a playing season, or prior to the beginning of a playing season to remove overseeded winter rye grass. Depending on the type of grass, its location and the weather, the grass will usually regenerate from the stolons in a matter of days and the turf will be playable again within two weeks. Where the turf is exclusively of warm season grass, the system involves removing the grass blades and any thatch build up. Where the turf has been overseeded with another grass, the system may involve removing also the other grass, at least such of it as is above soil level so that, unless it, too, is stoloniferous, it will not regenerate. Where the turf is reinforced with artificial fibres, the system may leave those artificial fibres in place.

The upper layer of turf may be removed by the use of a rotor as described in WO2013/027005, GB2494275 and GB2487262. Such a rotor comprises a horizontal cylinder with teeth set helically along it in two or four spaced helical tracks, and driven in rotation about its horizontal axis as it is moved forwardly over the surface, rotated at such a speed that the teeth engage the entire surface. Such a roller is described in WO2013/027005 as being adapted to treat a fibre reinforced turf such as Desso® Grassmaster to remove grass, thatch and even infested matrix, with the blades digging below the matrix surface, without dislodging the fibre reinforcement.

The rotor should, for present purposes, however, be set so that its teeth just skim the matrix surface, and should be provided with facility for fine height adjustment, which may be either in fine steps or continuous. It will, of course, at this height, not dislodge any fibre reinforcement

By fine height adjustment, in this present context, is meant substantially finer adjustment than is customarily used. Adjustment is desirably provided to finer than 1mm, preferably finer than 0.1mm, and preferably even finer. Desirably height is adjusted by rotating a wheel, of which one turn corresponds to a height adjustment of 0.1mm, so that even finer adjustment I had by fractional turns. The height may be set by treating a trial area of turf and adjusting the height until just the stolons are left exposed.

When used to treat so-reinforced warm season grass turf according to the present invention, any artificial fibres would, of course, also be preserved, as the teeth do not penetrate the matrix. However, a prime use for the system of the invention will be for playing surfaces such as golf course greens, which are not normally fibre-reinforced. Well-constructed and maintained golf greens are locally flat, though they may, of course, be to some extent contoured to make for interesting putting. Usually, however, a correct height setting for a particular green will be correct all over that green.

Systems for managing warm season, stoloniferous grass turf according to the invention will now be described with reference to the accompanying drawings, in which:
- Figure 1: is a cross-section of stoloniferous, warm season turf;
- Figure 2: is a cross-section like Figure 1 of the same turf after treatment according to the system;
- Figure 3: is a view of the surface of the turf shown in Figure 2;
- Figure 4: is a cross-section like Figure 1 of stoloniferous, warm season turf reinforced with artificial fibres;
- Figure 5: is a cross-section like Figure 2 of the turf of Figure 3 after treatment according to the invention;
- Figure 6: is a view of the surface of the turf shown in Figure 4;
- Figure 7: is a cross-section like Figure 1 of stoloniferous, warm season turf overplanted with winter rye grass;
- Figure 8: is a view of a rotor adapted to carry out treatment of turf according to the invention; and
- Figure 9: is a view of a rotor as shown in Figure 8 in use

The drawings illustrate a system for managing warm season, stoloniferous grass turf 11 comprising removing the upper layer 12 of turf 11 down to but not including the stolons 13, and allowing the grass to regenerate when growing conditions are suitable..

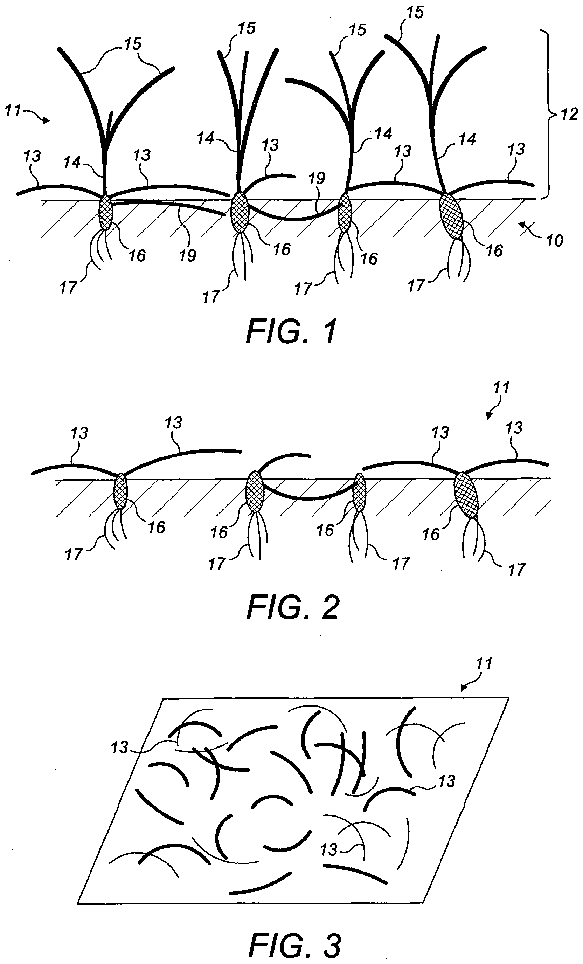

Figure 1 shows, in section, stoloniferous turf 11 comprising an upper layer 12 growing in a matrix 10 usually of soil or sand, comprising stalks 14 and blades 15 of warm season grass growing from crowns 16 with roots 17. The stolons 13 are runners that spread out from the crowns 16 to interconnect them, much as do the rhizomes 19 below the level of the matrix 10.

The treatment according to the system comprises removing stalks 14 and blades 15, leaving just stolons 13 above ground, as shown in Figure 2. Figure 3 shows how the turf looks from above after this treatment, with just the stolons 13 in evidence. The stolons 13 may be connected to one or two crowns 16 but will in any event rapidly regenerate to produce new grass.

The treatment is carried out at an appropriate time, which would, of course, usually be at the end of a playing season, or to remove winter grass to let warm season grass regenerate..

Depending on the type of grass, its location and the weather, grass will usually regenerate from the stolons 13 in a matter of days and be playable again within two weeks.

The system involves removing any thatch build-up, not shown in Figures 1 to 3.

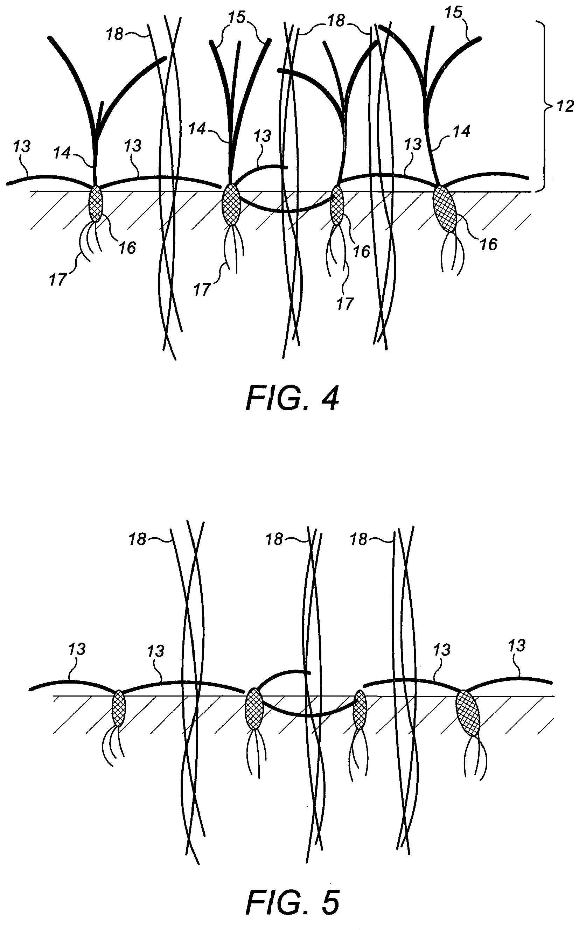

Figures 4 to 6 illustrate the system applied to turf 11 reinforced with artificial grass fibres 18. As illustrated, the fibres 18 are inserted as in the Desso® Grassmaster system by injecting them to a depth of about 20 centimetres and comprise some 3% of the turf.
Treatment according to the system leaves the artificial grass 18 in place along with the stolons 13. A couple of weeks after treatment, the warm season grass regenerates from the stolons 13.

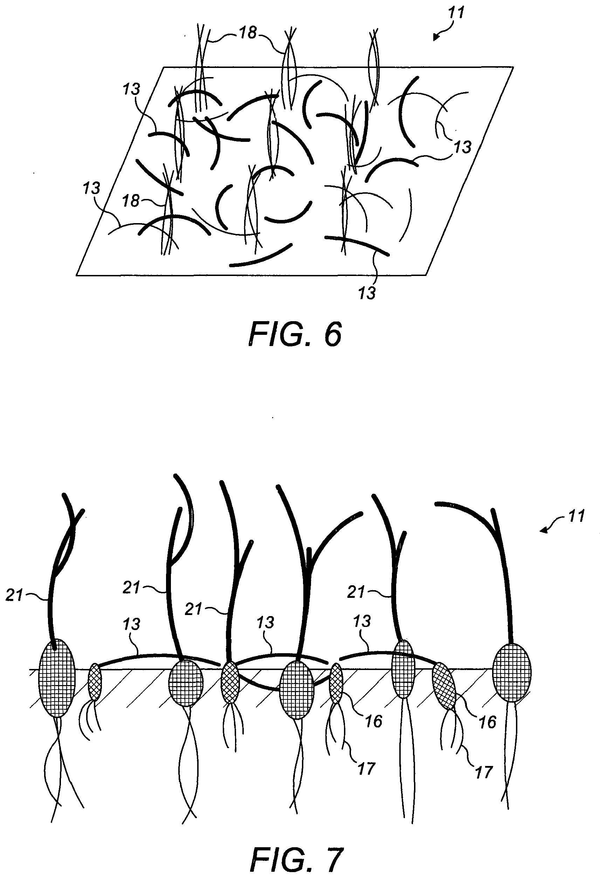

Figure 7 illustrates a dormant warm season grass turf overseeded with another grass 21, such as winter grass or weed grasses (*poa annua*). At the beginning of the warm season, the system involves removing the other grass, at least such of it as is above soil level, leaving, however, the stolons 13 of the stoloniferous warm season grass. Unless the other grass is also stoloniferous, it will not regenerate.

The upper layer of turf is removed by the use of a rotor as described in WO2013/027005, GB2492375 and GB2487262. The rotor should be set so that its teeth just skim the soil surface, and should be provided with facility for fine height adjustment, which may be either in fine steps or continuous. The height may be set by treating a trial area of turf and adjusting the height until just the stolons are left exposed.

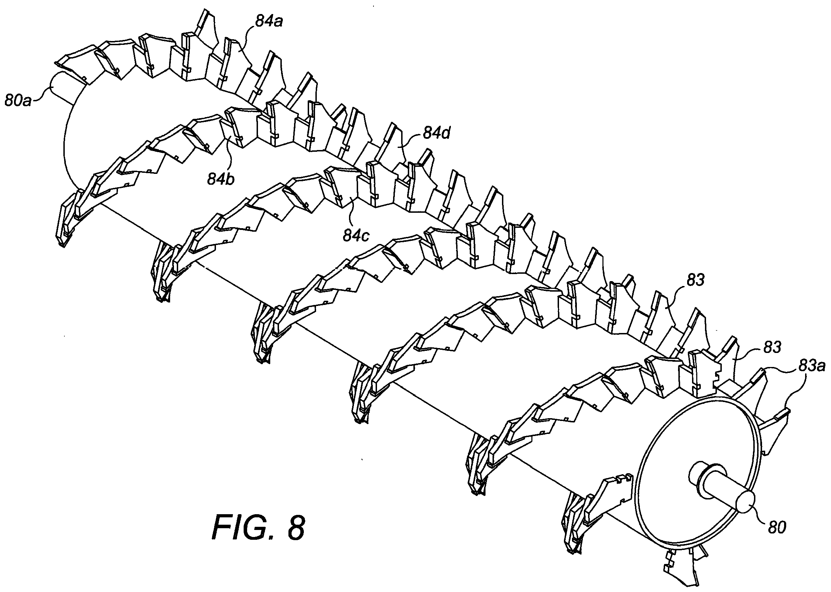

Figure 8 illustrates such a cylindrical turf treatment rotor 80 adapted to be driven in rotation about a horizontal axis - axle 80a - and provided with teeth 83 extending along one or more helical tracks 84 on the rotor 80, the teeth 83 being individually attached to the rotor 80 and connected to adjacent teeth 83, the teeth 83 having tips 83a extending at least 60mm above the cylindrical surface of the rotor 80.

The tips 83a extend up to 200mm above the cylindrical surface of the rotor.

The teeth 83 extend on spaced helical tracks 84a, 84b, 84c, 84d.

The teeth 83 are removably attached, so that they may be replaced or refurbished when worn or damaged in use and so that the rotor 80 may be reconfigured. With teeth 83 closely spaced along each of four helical tracks 84, the rotor 80 will be capable of removing in one pass all or substantially all thatch, grass and infected humus and/or sand, but with two tracks only, it will function as a scarifier, selectively removing thatch to a desired depth.

However, the rotor can be reconfigured by removing some of the teeth 83 to leave two instead of four helical tracks, which will be adequate for use in the warm season grass system of the invention.

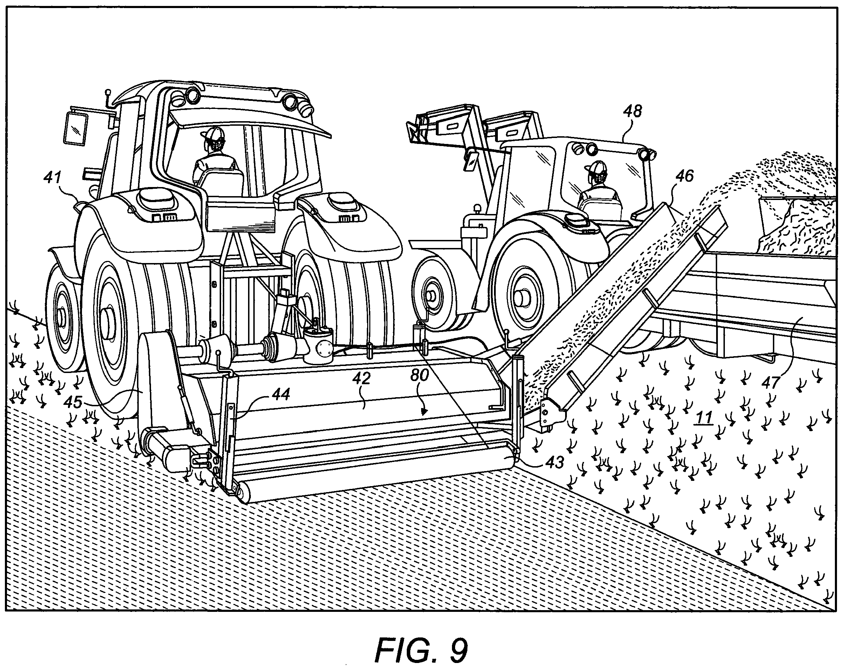

In use, as shown in Figure 9, the rotor 80, not shown *per se* in this Figure, but mounted in a chassis 42, is drawn over turf 11, by a tractor 41. The chassis 42 has a ground roller 43 and a blade height control arrangement 44 adapted to deploy the teeth 13 below turf level 14. The tractor 41 is driven to traverse the rotor 80 over the turf so deployed and has a power take-off transmission 45 to rotate the rotor 80 so that the blades 13 move over the turf 11 pulling out thatch and grass leaving just stolons. The rotor 80 is driven so that the teeth 13 drive forward over the turf 11 as it moves forward. The material lifted from the turf is driven to the right of the tractor 41 by the action of the helically disposed teeth 13 and is lifted on an elevator 46 into a trailer 47 drawn behind a second tractor 48.

The height control arrangement 44 is adjustable either continuously, or in fine steps of 1 mm or less, preferably 0.1 mm and preferably even finer, say 0.01 mm. Such a degree of adjustability, while it seems excessive for a turf surface, is highly advantageous, allowing the roller height to be set so that it removes all unwanted vegetable matter without touching the soil. A geared arrangement with an input wheel effecting an adjustment of 0.1mm per rotation allows for finer than 0.1mm adjustment by a fractional turn.

A height control arrangement with a digital readout is useful, and may be calibrated to indicate precisely what the height above soil level is. It is important, for best performance, that the arrangement has little or no play, and that, once set, the height setting does not drift with during use.

## Claims

1. A method for managing warm season, stoloniferous grass turf (11) on sports fields, comprising removing the upper layer (12) of turf down to but not including the stolons (13), and allowing the grass to regenerate, **characterised in that** the layer (12) of turf (11) is removed using a height-adjustable rotor (80), the rotor (80) being adjusted for height so that the teeth (83) just skim the soil surface, the rotor (80) being traversed over the turf (11) and rotated at such speed relative to the rate of traverse over the turf that no or substantially no part of the turf (11) is left untreated, **characterized in that** the rotor (80) is rotated about a horizontal axis (80a) and comprises teeth (83).

2. A method according to claim 1, in which the teeth (83) are arranged helically on the rotor (80).

3. A method according to claim 2, in which there are two or four helices (84).

4. A method according to claim 1, in which the height of the rotor (80) above the soil surface is set by treating a trial area of turf (11) and adjusting the height until just the stolons (13) are left exposed.

5. A method according to claim 1, in which the rotor (80) is adjustable in height to better than 1mm, preferably 0.1mm, more preferably 0.01mm.

6. A method according to claim 1, in which the height adjustment is effected by a geared arrangement with an adjusting wheel effecting 0.1mm height adjustment per rotation.

7. A method according to any one of claims 1 to 6, carried out on sports turf (11) at the end of a playing season to remove grass blades and thatch.

8. A method according to any one of claims 1 to 6, carried out on turf (11) overseeded with a winter grass (21), to remove the winter grass (21) to leave the stoloniferous grass (11) to regenerate for the warm season.

9. A method according to any one of claims 1 to 6, carried out on turf (11) reinforced with artificial grass fibres (18), leaving stolons (13) and the artificial grass (18) in place.

## Patentansprüche

1. Verfahren zum Managen von ausläuferartigem Grasrasen der warmen Jahreszeit (11) auf Sportplätzen, umfassend Entfernen der oberen Schicht (12) des Rasens bis zu den, jedoch nicht einschließlich der, Stolonen (13) und Ermöglichen, dass sich das Gras erholt, **dadurch gekennzeichnet, dass** die Schicht (12) des Rasens (11) unter Verwendung eines höhenverstellbaren Rotors (80) entfernt wird,
wobei der Rotor (80) derart höhenverstellbar ist, dass die Zähne (83) lediglich über die Bodenoberfläche streifen, wobei der Rotor (80) über den Rasen (11) bewegt wird und mit einer solchen Geschwindigkeit bezogen auf die Bewegungsgeschwindigkeit über den Rasen gedreht wird, dass kein Teil oder im Wesentlichen kein Teil des Rasens (11) unbehandelt bleibt, **dadurch gekennzeichnet, dass** der Rotor (80) um eine horizontale Achse (80a) gedreht wird und Zähne (83) umfasst.

2. Verfahren nach Anspruch 1, bei dem die Zähne (83) spiralförmig auf dem Rotor (80) angeordnet sind.

3. Verfahren nach Anspruch 2, bei dem zwei oder vier Spiralen (84) vorhanden sind.

4. Verfahren nach Anspruch 1, bei dem die Höhe des Rotors (80) über der Bodenoberfläche durch Behandeln eines Versuchsbereichs von Rasen (11) und Anpassen der Höhe, bis lediglich die Stolonen (13) freiliegen, eingestellt wird.

5. Verfahren nach Anspruch 1, bei dem der Rotor (80) besser als 1 mm, vorzugsweise 0,1 mm, noch bevorzugter 0,01 mm höhenverstellbar ist.

6. Verfahren nach Anspruch 1, bei dem die Höhenverstellung durch eine ausgerichtete Anordnung erzielt wird, wobei durch ein Stellrad eine Höhenverstellung von 0,1 mm pro Drehung erzielt wird.

7. Verfahren nach einem der Ansprüche 1 bis 6, das auf Sportrasen (11) am Ende einer Spielsaison durchgeführt wird, um Grashalme und Rasenfilz zu entfernen.

8. Verfahren nach einem der Ansprüche 1 bis 6, das auf Rasen (11) durchgeführt wird, der mit einem Wintergras (21) übersät ist, um das Wintergras (21) zu entfernen, um es dem ausläuferartigen Gras (11) zu ermöglichen, sich für die warme Jahreszeit zu erholen.

9. Verfahren nach einem der Ansprüche 1 bis 6, das auf Rasen (11) durchgeführt wird, der mit Kunstrasenfasern (18) verstärkt ist, wobei die Stolonen (13) und das Kunstgras (18) nicht entfernt werden.

## Revendications

1. Procédé de gestion de gazon stolonifère à la saison chaude (11) sur des terrains de sport, comprenant l'élimination de la couche supérieure (12) de gazon jusqu'aux stolons (13), à l'exception de ces derniers et permettant à l'herbe de se régénérer, **caractérisé en ce que** la couche (12) de gazon (11) est enlevée au moyen d'un rotor réglable en hauteur (80),
ledit rotor (80) étant réglé en hauteur afin que les dents (83) effleurent juste la surface du sol, le rotor (80) étant passé sur le gazon (11) et mis en rotation à une vitesse telle par rapport à la vitesse de parcours sur le gazon qu'aucune ou pratiquement aucune partie du gazon (11) reste non traitée, **caractérisé en ce que** le rotor (80) tourne autour d'un axe horizontal (80a) et comprend des dents (83).

2. Procédé selon la revendication 1, lesdites dents (83) étant agencées hélicoïdalement sur le rotor (80).

3. Procédé selon la revendication 2, deux ou quatre hélices (84) étant présentes.

4. Procédé selon la revendication 1, ladite hauteur du rotor (80) au-dessus de la surface du sol étant établi en traitant une zone d'essai de gazon (11) et en réglant la hauteur jusqu'à ce que seuls les stolons (13) soient laissés à découvert.

5. Procédé selon la revendication 1, ledit rotor (80) étant réglable en hauteur à un niveau meilleur que 1 mm, de préférence 0,1 mm, idéalement 0,01 mm.

6. Procédé selon la revendication 1, ledit réglage en hauteur étant assuré par un système d'engrenage, une molette de réglage effectuant un réglage de hauteur de 0,1 mm par rotation.

7. Procédé selon l'une quelconque des revendications 1 à 6, réalisée sur un gazon de sport (11) à la fin d'une saison sportive afin d'éliminer les brins d'herbe et la chaume.

8. Procédé selon l'une quelconque des revendications 1 à 6, réalisé sur un gazon (11), ensemencé en plus avec une herbe d'hiver (21), pour enlever l'herbe hiver (21) afin de laisser l'herbe stolonifère (11) se régénérer pour la saison chaude.

9. Procédé selon l'une quelconque des revendications 1 à 6, réalisé sur un gazon (11) renforcé avec des fibres d'herbe artificielles (18), laissant les stolons (13) et l'herbe artificielle (18) en place.
